# EUROPÄISCHE PATENTANMELDUNG

(11) **EP 1 998 152 A2**
(43) Veröffentlichungstag der Anmeldung: **03.12.2008**
(21) Anmeldenummer: 08009692.8
(22) Anmeldetag: 28.05.2008
(51) Int. Cl.: G01G 21/23, G01W 1/14, E04B 7/00, E04D 13/00

(54) **Informationsvorrichtung für Bauwerke**

(30) Priorität: 29.05.2007 DE 202007007627 U
(71) Anmelder: Terlinden, Joachim, 47475 Kamp-Lintfort (DE)
(72) Erfinder: Terlinden, Joachim, 47475 Kamp-Lintfort (DE)
(74) Vertreter: DR. STARK & PARTNER

(57) **Zusammenfassung**

Die Erfindung betrifft eine Informationsvorrichtung für Bauwerke, insbesondere Gebäude wie beispielsweise Massivbauten, Glasbauten sowie Stahl- bzw. Holzkonstruktionen, z. B. in Form von Hallen oder dergleichen.

Um eine Vorrichtung anzugeben, mit der eine äußere Belastung festgestellt und zugänglich gemacht werden kann, so dass durch Vergleich mit einem individuell vorzugebenden Maximalwert bevorstehendes Versagen frühzeitig festgestellt werden kann, so dass durch Räumung des Gebäudes Personenschaden vermeidbar ist bzw. durch Verminderung und insbesondere Beseitigung der äußeren Belastung Sach- und/oder Personenschaden verringerbar oder sogar vermeidbar ist, soll die Informationsvorrichtung zur Ausgabe einer Information über eine Last, insbesondere Dachlast, mit zumindest einer Erfassungseinrichtung für zumindest eine auf einen Gebäudeteil, insbesondere auf zumindest einen Teil des Dachs, wirkende Last versehen sein, wobei die Erfassungseinrichtung mit einer Anzeigeeinrichtung zur Ausgabe der Anzeige der gemessenen aktuell wirkenden Last verbunden ist.

## Beschreibung

Die Erfindung betrifft eine Informationsvorrichtung für Bauwerke, insbesondere Gebäude wie beispielsweise Massivbauten, Glasbauten sowie Stahl- bzw. Holzkonstruktionen, z. B. in Form von Hallen oder dergleichen.

Aus der Praxis ist bekannt, dass die Dachflächen von Gebäuden, unabhängig davon, ob es sich um Flachdächer oder geneigte Dachflächen handelt, von ihrer Statik her nur für eine bestimmte Maximallast ausgelegt sind.

Nachteilig hierbei ist, dass durch Niederschläge, beispielsweise in Form von Schnee und Eisregen oder gefrierende Nässe schnell Lastzustände erreicht werden können, die bei der Konstruktion und Auslegung des Bauwerks nicht berücksichtigt wurden. Zusätzlich zu den baulichen Schäden durch ein statisch versagendes und ggf. teilweise oder sogar vollständig einstürzendes Bauwerk kommt es in solchen Fällen immer wieder nicht nur zu Sachschäden, sondern auch zu Personenschäden, die bei rechtzeitiger Kenntnis der aktuellen äußeren Belastung noch hätten vermieden werden können.

Aufgabe der Erfindung ist es, die vorgenannten Nachteile zu vermeiden und eine Vorrichtung anzugeben, mit der eine äußere Belastung festgestellt und zugänglich gemacht werden kann, so dass durch Vergleich mit einem individuell vorzugebenden Maximalwert bevorstehendes Versagen frühzeitig festgestellt werden kann, so dass durch Räumung des Gebäudes Personenschaden vermeidbar ist bzw. durch Verminderung und insbesondere Beseitigung der äußeren Belastung Sach- und/oder Personenschaden verringerbar oder sogar vermeidbar ist.

Diese Aufgabe wird gelöst durch eine Informationsvorrichtung der eingangs genannten Art, die zur Ausgabe einer Information über eine Last, insbesondere Dachlast, mit zumindest einer Erfassungseinrichtung für zumindest eine auf einen Gebäudeteil, insbesondere auf zumindest einen Teil des Dachs, wirkende Last versehen ist, wobei die Erfassungseinrichtung mit einer Anzeigeeinrichtung zur Ausgabe der Anzeige der gemessenen aktuell wirkenden Last verbunden ist.

Vorteilhafterweise kann die Informationsvorrichtung als Warnvorrichtung zur Ausgabe eines Warnsignals bei kritischen Lastzuständen, insbesondere bei einer die statische Stabilität überschreitenden Last, ausgebildet sein, wobei die Erfassungseinrichtung mit einer Auswerteeinrichtung zur Auswertung der erfassten Last verbunden ist, die ihrerseits mit einer Signaleinrichtung zur Ausgabe eines zur Warnung dienenden Informationssignals bei Ermittlung einer Überlast verbunden ist. Hierdurch wird eine Früherkennung von Überlastzuständen ermöglicht, so dass ein lastbedingtes Versagen frühzeitig erkennbar ist und Personenschäden durch Räumung des betroffenen Gebäudes/Gebäudeteiles vermieden oder zumindest reduziert werden können.

Dabei ist die Ermittlung der flächenbezogenen Last auf der durch die Erfassungseinrichtung zu bewertende Gebäudefläche, insbesondere Dachfläche bzw. Dachsegment durch Messung der Last auf der Erfassungseinrichtung in Relation zur Fläche der Erfassungseinrichtung möglich. Diese flächenbezogene Last ist dann falls gewünscht wiederum auf die gesamten Fläche, insbesondere Dachfläche, umrechenbar.

Für die Auswertung des tatsächlichen Lastzustandes und die Qualifizierung dieses tatsächlichen Lastzustandes als kritisch oder unkritisch können Maximalwerte in der Auswerteeinrichtung hinterlegt sein, so dass eine Ausgabe des warnenden Informationssignals, beispielsweise in akustischer Form durch eine Sirene oder dergleichen oder aber in visueller Form durch ein Blinklicht oder dergleichen, aktivierbar ist.

Vorzugsweise kann die Erfassungseinrichtung im Wesentlichen dem Dachverlauf entsprechend, insbesondere plan, ausgebildet und in dachflächenparalleler Ausrichtung in die Dachfläche integriert sein, so dass auf ihr befindliches Material, wie z. B. Schnee, Eis, stehendes Wasser oder dergleichen, in gleicher Weise aufliegt wie auf dem restlichen Dach um die Erfassungseinrichtung herum.

Eine vollständige Abdichtung schützt sowohl die Erfassungseinrichtung und verhindert einen Durchtritt der Last im Bereich der Erfassungseinrichtung und eine Beaufschlagung der Unterseite, welche die Messung verfälschen würde.

Auch kann die Erfassungseinrichtung nach unten durch eine Platte oder Membran abgeschlossen und rundum mit dieser Platte dicht und beweglich verbunden sein. Dann genügt die Verankerung der Platte auf der Gebäude- oder Dachfläche gegen Aufschwimmmen.

Vorzugsweise kann die Oberfläche der Erfassungseinrichtung im Wesentlichen den Eigenschaften der Oberfläche der Gebäudefläche, insbesondere Dachfläche, entsprechend ausgebildet sein, wobei die für das Schmelzverhalten von Schnee und Eis relevanten Parameter eher ungünstigere, allenfalls genau übereinstimmende Werte wie das Dach aufweisen, so dass Schnee oder Eis nicht auf der Erfassungseinrichtung schneller schmelzen, was zur Erfassung eines zu niedrigen Lastzustandes führen würde. Somit soll die Farbe eher heller sein, die Oberflächenstruktur eher rauer und Temperaturleitfähigkeit und -speichervermögen eher geringer sein, so dass auf der Erfassungseinrichtung nicht weniger Schnee oder Eis liegen bleibt als auf dem restlichen Dach.

Vorteilhafterweise kann die Erfassungseinrichtung unter Last keine, allenfalls eine sehr geringe Verlagerung erfahren, so dass kaum, insbesondere keine Abstützeffekte innerhalb der Last, insbesondere Schneedecke, zu dem Bereich außerhalb der Erfassungseinrichtung auftreten.

Ferner kann die Erfassungseinrichtung eine Platte mit unterseitiger Wiegeeinrichtung umfassen, wobei die Wiegeplatte vorzugsweise an wenigstens drei Punkten über Auflager verfügt, so dass durch eine technisch einfache Ausgestaltung eine Erfassung des Lastzustandes möglich ist. An jedem dieser Auflager wird die Gewichtskraft gemessen, und aus der Summe dieser Kräfte abzüglich des Eigengewichts der Wiegeplatte (und evtl. zugehöriger Anbauteile) ergibt sich dann die auf die Wiegeplatte wirkende Last, beispielsweise durch eine Schneedecke, Eis- oder Wasserschicht oder dergleichen.

Auch kann die Wiegeeinrichtung ein hydraulisches und/oder pneumatisches Kissen umfassen, das mit einem frostbeständigem Medium befüllt ist und mit einem Druckmesser verbunden ist, so dass eine relative Bewegung von Oberseite und Unterseite aufeinander zu ohne Materialwiderstand einer inneren Struktur möglich ist, wobei das Medium gasförmig, z. B. Luft, oder flüssig, z. B. in Form einer frostbeständigen Alkoholmischung, sein kann. Bei flüssigen Medien kann nur ein waagerechter Einsatz erfolgen, wohingegen sich gasgefüllte Kissen auch für schräge oder geneigte Flächen eignen können.

Vorteilhafterweise kann eine Übermittlungseinrichtung für die drahtlose Weiterleitung der erfassten Last an die Auswerteeinrichtung, insbesondere ein Funksender, beispielsweise ein Kurzstreckenfunksender, oder eine Infrarot- oder Ultraschallsendeeinrichtung, vorgesehen sein, so dass keine körperliche Verbindung erforderlich ist und eine einfache Installation ohne größere Eingriffe in die bestehende Bausubstanz durchführbar ist.

Erfindungsgemäß kann die Signaleinrichtung einen akustischen und/oder optischen Signalgeber umfassen, so dass je nach Erfordernis eine sichere Signalisierung einer festgestellten Überlast möglich ist. Dies kann beispielsweise auch durch einen Vibrationsalarm oder dergleichen erfolgen.

Bei einem bevorzugten Ausführungsbeispiel der Erfindung kann die Signaleinrichtung einen elektronischen Signalgeber, wie z. B. ein Modem, einen Funksender, insbesondere GSM-Sendeeinrichtung, für die Versendung einer Warninformation umfassen, so dass ggf. auch eine nicht-öffentliche, gezielte Benachrichtigung einer oder mehrerer Person(en) erfolgen kann.

Weiterhin kann eine Kommunikationseinrichtung vorgesehen sein, die eine Fernabfrage der aktuell erfassten Last ermöglicht, so dass bei einer vermuteten sich anbahnenden Überlast eine Überprüfung des aktuellen Lastzustandes möglich ist.

## Patentansprüche

1. Informationsvorrichtung für Bauwerke, insbesondere Gebäude wie beispielsweise Massivbauten, Glasbauten sowie Stahl- bzw. Holzkonstruktionen, z. B. in Form von Hallen oder dergleichen, zur Ausgabe einer Information über eine Last, insbesondere Dachlast, mit zumindest einer Erfassungseinrichtung für zumindest eine auf einen Gebäudeteil, insbesondere auf zumindest einen Teil des Dachs, wirkende Last, die mit einer Anzeigeeinrichtung zur Ausgabe der Anzeige der gemessenen aktuell wirkenden Last verbunden ist.

2. Informationsvorrichtung nach dem vorhergehenden Anspruch, **dadurch gekennzeichnet, dass** die Informationsvorrichtung als Warnvorrichtung zur Ausgabe eines Warnsignals bei kritischen Lastzuständen, insbesondere bei einer die statische Stabilität überschreitenden Last, ausgebildet ist, wobei die Erfassungseinrichtung mit einer Auswerteeinrichtung zur Auswertung der erfassten Last verbunden ist, die ihrerseits mit einer Signaleinrichtung zur Ausgabe eines zur Warnung dienenden Informationssignals bei Ermittlung einer Überlast verbunden ist.

3. Informationsvorrichtung nach einem der vorhergehenden Ansprüche, **dadurch gekennzeichnet, dass** die Erfassungseinrichtung im Wesentlichen dem Dachverlauf entsprechend, insbesondere plan, ausgebildet und in dachflächenparalleler Ausrichtung in eine Gebäudefläche, insbesondere in eine Dachfläche, integriert ist.

4. Informationsvorrichtung nach einem der vorhergehenden Ansprüche, **dadurch gekennzeichnet, dass** die Erfassungseinrichtung mit einer vollständigen Abdichtung versehen ist.

5. Informationsvorrichtung nach einem der vorhergehenden Ansprüche, **dadurch gekennzeichnet, dass** die Erfassungseinrichtung nach unten durch eine Platte oder Membran abgeschlossen und rundum mit dieser Platte dicht und beweglich verbunden sowie insbesondere auf der Gebäude- oder Dachfläche gegen Aufschwimmmen gesichert ist.

6. Informationsvorrichtung nach einem der vorhergehenden Ansprüche, **dadurch gekennzeichnet, dass** die Oberfläche der Erfassungseinrichtung im Wesentlichen den Eigenschaften der Oberfläche der Gebäudefläche, insbesondere Dachfläche, entsprechend ausgebildet ist, wobei die für das Schmelzverhalten von Schnee und Eis relevanten Parameter eher ungünstigere, allenfalls genau übereinstimmende Werte wie das Dach aufweisen.

7. Informationsvorrichtung nach einem der vorhergehenden Ansprüche, **dadurch gekennzeichnet, dass** die Erfassungseinrichtung unter Last keine, allenfalls eine sehr geringe Verlagerung erfährt.

8. Informationsvorrichtung nach einem der vorhergehenden Ansprüche, **dadurch gekennzeichnet, dass** die Erfassungseinrichtung eine Platte mit unterseitiger Wiegeeinrichtung umfasst, wobei die Wiegeplatte vorzugsweise an wenigstens drei Punkten über Auflager verfügt.

9. Informationsvorrichtung nach einem der vorhergehenden Ansprüche, **dadurch gekennzeichnet, dass** die Wiegeeinrichtung ein hydraulisches und/oder pneumatisches Kissen umfasst, das mit einem frostbeständigem Medium befüllt ist und mit einem Druckmesser verbunden ist.

10. Informationsvorrichtung nach einem der vorhergehenden Ansprüche, **dadurch gekennzeichnet, dass** eine Übermittlungseinrichtung für die drahtlose Weiterleitung der erfassten Last an die Auswerteeinrichtung, insbesondere ein Funksender, beispielsweise ein Kurzstreckenfunksender, oder eine Infrarot- oder Ultraschallsendeeinrichtung, vorgesehen ist.

11. Informationsvorrichtung nach einem der vorhergehenden Ansprüche, **dadurch gekennzeichnet, dass** die Signaleinrichtung einen akustischen und/oder optischen Signalgeber umfasst.

12. Informationsvorrichtung nach einem der vorhergehenden Ansprüche, **dadurch gekennzeichnet, dass** die Signaleinrichtung einen elektronischen Signalgeber, wie z. B. ein Modem, einen Funksender, insbesondere GSM-Sendeeinrichtung, für die Versendung einer Warninformation umfasst.

13. Informationsvorrichtung nach einem der vorhergehenden Ansprüche, **dadurch gekennzeichnet, dass** eine Kommunikationseinrichtung vorgesehen ist, die eine Fernabfrage der aktuell erfassten Last ermöglicht.
